# EUROPEAN PATENT SPECIFICATION

(11) **EP 1 531 376 B1**
(45) Date of publication and mention of the grant of the patent: **17.01.2007**
(21) Application number: 03380264.6
(22) Date of filing: 14.11.2003
(51) Int. Cl.: G05B 23/00, F03D 7/00, F03D 11/00

(54) **Monitoring and data processing equipment for wind turbines and predictive maintenance system for wind power stations**
Überwachungs- und Datenverarbeitungseinheit für Windräder und System für eine vorbeugende Wartung für Windräderanlagen
Unité de contrôle et de traitement de l'information pour turbines éoliennes et système de maintenance préventive pour centrales éoliennes

(43) Date of publication of application: 18.05.2005
(73) Proprietor: Gamesa Eolica, S.A. (Sociedad Unipersonal), 31013 Pamplona (Navarra) (ES)
(72) Inventor:
(74) Representative: Davila Baz, Angel

(56) References cited:
- WO-A-83/01490
- WO-A-99/57435
- DE-A- 10 113 038
- DE-A- 10 113 039

## Description

### Field of the Invention

The present invention is comprised within the predictive maintenance systems applicable to wind turbines forming part of a wind park.

### Background of the Invention

Basically, a wind turbine produces electricity in the following manner: the wind makes the rotor of the wind turbine rotate, which causes the rotation of a generator (a dynamo) producing electricity.

The main components of the nacelle of a wind turbine are:
- Rotor: it is constituted of several blades collecting the wind; it is screwed to the main shaft.
- Main shaft: between rotor and step-up gear.
- Gearbox: connected between the rotor (at the other end of the main shaft) and the electricity generator.
- Electricity generator.
- Ring system: allows rotation of the nacelle in order to face the wind according to the signal of the wind vane connected to the control system.
- Control system: controls the majority of the parts of the wind turbine; thus, for example, it controls the ring system.

A wind park is made up of one or more wind turbines (up to hundreds) and other elements such as a transformation center or electric substation, and one or more meteorological towers. All these elements are normally supervised by a park supervision and control system (or remote control) installed in a central computer located in the wind park itself and connected to the wind turbines through a local communications network. The application installed in this central computer collects the operation variables of said elements, as well as the alarms produced in them.

The difficulty of applying traditional predictive maintenance techniques in wind turbines is mainly based on the following aspects:
a) the need to install a large amount of predictive equipment- one per machine- and, therefore, the generation of large amount of information which will be necessary to process in order to detect possible problems;
b) the difficulty in accessing the data due to the location of the prediction equipment- located in the nacelle of each wind turbine and the wind turbines, in turn, in locations far from urban centers-;
c) the need to simplify maintenance and minimize the cost of each system; and,
d) the need to condition signal capturing to a specific operating condition of the wind turbine and that this operating is maintained during signal capturing for the purpose of eliminating noises introduced by transient behaviors of the wind turbine, and to obtain useful information on the condition of the critical components of the wind turbine.

WO-99/57435-A discloses a wind turbine having a sensor provided on at least one of the blades. The sensor is formed of a tri-axial accelerometer for indicating the stresses to which the blade has been subjected. As a result a detailed picture is given of both edge-wise and flap-wise vibrations of the blade such that the state of the blade is determined more accurately. By means of a processing unit both the edge-wise and the flap-wise natural frequency of the blade can be estimated. If one of these frequencies changes considerably or abruptly, this is an indicatation that the blade has been damaged.

### Description of the invention

The invention refers to a monitoring and processing equipment for wind turbines according to claim 1, and to a predictive maintenance system for wind parks according to claim 11. Preferred embodiments of the equipment and system are defined in the dependent claims.

The predictive maintenance system of the invention solves the drawbacks mentioned above, and it does so through a system which uses the usual infrastructures in wind parks and which drastically decreases the need to dedicate resources to analyzing the information as a result of its conditioned and stable monitoring and to its processing capability.

The predictive maintenance system of the invention is based on vibration analysis, optimized for wind turbines.

The main objective of the predictive maintenance system in wind turbines is the premature detection of deteriorations, defects and failures in the following critical components of the wind turbine: main shaft, gearbox and generator.

It is an objective of the present invention to provide a minimum maintenance and low cost equipment, easily integrate in the nacelle of the wind turbine, with data processing capability and autonomous detection of alarms related to the condition of the critical mechanical components of the wind turbine, and capable of reporting them, through the park communications system, to the usual supervision and control system, without needing to have specific auxiliary software in the park itself.

The predictive maintenance system of the invention is applicable to wind parks, the wind park comprising at least one wind turbine which, in turn, as previously indicated, includes a control system as one of its main components providing operation variables of the wind turbine.

The invention refers to a monitoring and processing equipment for a wind turbine, the wind turbine including a control system, and the monitoring and processing equipment being configured according to the type of wind turbine in which it is installed.

The equipment of the invention comprises:
- connection means with said control system of the wind turbine, and
- connection means with a group of accelerometers placed in pre-established components of the wind turbine,
said monitoring and processing equipment being configured to start capturing signals of the group of accelerometers as long as the predetermined operation variables of the wind turbine, received from the control system, are within a predetermined operating range, and
said monitoring and processing equipment being configured to complete said signal capturing as long as the value of said operation variables which has produced the taking of measurements does not vary, during the entire signal capturing, beyond upper and lower limits configured in the equipment, and
said monitoring and processing equipment comprising
- processing means for processing the captured signals of the accelerometers to obtain a set of overall variables associated to the captured signals, and
- means for generating alarms related to failures or malfunctioning of the mechanical components of the wind turbine.

The pre-established components of the wind turbine are preferably the main shaft, gearbox and generator.

The predetermined operation variables of the wind turbine which determine the sampling of the signals of the accelerometers are, preferably, the instantaneous power produced by the wind turbine, the revolutions per minute of the generator, and the rotation of the ring.

The predetermined operation ranges of said variables considered valid for capturing signals are preferably defined according to rated features (for example, rated power) of the wind turbine; it can generally be considered that they are approximately in the range corresponding to the operation of the wind turbine at a little over half of its rated power.
- The operation ranges lower than that defined are not suitable for detecting problems in the mechanical components since the latter are not subject to the load necessary for obtaining useful information from an analysis of the measurement.
- The operation ranges greater than that defined are not suitable for detecting problems in the mechanical components since, due to the operation of the control system of the wind turbine, the measurements are greatly scattered.
- Nor are measurements of the accelerometers taken when the ring of the nacelle is rotating, since the teeth of the gears can cause blows due to allowances which distort the measurement of the signal.

During the capturing process of the signal of the accelerometers, the values of the variables which determined the start of sampling should not vary beyond upper and lower limits which, for each operation variable, are determined by a percentage of the initial value of the variable, which shall be called stable operating conditions. In case this condition is not complied with, the sample is discarded.

Therefore, the system of the invention carries out continuous monitoring of critical components, preferably the main shaft, gearbox and generator, and this monitoring is:
- conditioned: to the operating condition of the machine, facilitated by the control system of the wind turbine; and
- stable: the operating conditions must be maintained during the complete sampling.

As previously indicated, to process the captured signals of the accelerometers, the monitoring equipment is provided with processing means for processing the captured signals of the accelerometers, preferably comprising:
o means for conditioning the signal, preferably: anti-aliasing filtering, signal digitalization, application of FFT (Fast Fourier Transforms) for obtaining the signal spectrum;
o means for calculating a series of overall values, which are preferably: crest factor, overall RMS (root-mean-square) of the signal, RMS of frequency bands;
o means for carrying out a level alarm detection algorithm; and
o means for carrying out a tendency alarm detection algorithm.

The means for generating alarms of the monitoring and processing equipment of the invention include means for generating alarms as a result of the application of the two previous alarm detection algorithms.

Preferably, capturing the signal of the accelerometers consists of capturing three consecutive signal samples: one for high-frequency processing, one for low-frequency processing, and one for digital filtering processing.

The parameters of the alarm detection algorithms as well as the definition of the maximum frequencies, frequency bands and other values can be configured in the monitoring and processing equipment.

The monitoring and processing equipment of the invention preferably includes storage means for storing the information introduced in or generated by the monitoring and processing equipment itself. This information includes the data obtained from the processing, such as spectra, overall values, alarms and sampling conditions, operation variables of the wind turbine, complete configuration of the equipment and overall variable and alarm recordings.

In other words, this storage preferably consists of:
o storing the spectra, together with the overall values associated to each spectrum and together with the operation variables of the wind turbine triggering data collection;
o storing the alarms generated after the application of the two alarm detection algorithms mentioned.

The policies for storing this information can be configured in the monitoring and processing equipment itself according to the processing and analysis needs; they can be the following:
■ number of spectra to store: all of them, the last n days, the last n days every x hours;
■ number of overall variables to store: all of them, the last n days, the last n days every x hours;
■ number of alarms to store: number of spectra associated to the alarm.

The invention also refers to a predictive maintenance system for wind parks, the wind park comprising a group of wind turbines, a communications network and a supervision and control system.

This predictive maintenance system comprises:
- a monitoring and processing equipment as described in the present specification, which is connected to the control system of the wind turbine, such that the monitoring and processing equipment is configured to send alarms through the control system of the wind turbine to the supervision and control system.

The predictive maintenance system of the invention is integrated in the information system using the available infrastructures for sending the information generated by the monitoring and processing equipment itself; this equipment is installed in the nacelle of the wind turbine, and is connected to the control system of the wind turbine which, in turn, is usually connected to the park supervision system and, therefore, does not need any computer or any application additional to the usual supervision and control system of the park. The monitoring and processing equipment is capable of sending alarms through the control system of the wind turbine to the usual supervision and control system of the park, these alarms being able to be represented in said system in the same manner as the rest of those generated by other elements such as, for example, the control system itself of the wind turbines.

In other words, to inform the operators of the processing result of the captured signals and of the possible detection of alarms, the monitoring and processing equipment sends the calculated overall values and alarms generated by the equipment to the normal park supervision system, through the control system of the wind turbine, using the existing infrastructures and thus achieving integration with the information system of the wind park; and in case there is an Ethernet communications network in the park, it sends the complete data (spectra, overall values and alarms) package to vibration analysis means configured for allowing skilled persons in vibration analysis to investigate in detail the information provided by the monitoring equipment.

With regard to the analysis of the information extracted from the predictive equipment, the predictive maintenance system has expert software installed in the computers of engineers skilled in spectral and vibration analysis, and which allows carrying out any type of analysis on the data collected from the predictive equipment installed in each wind turbine.

The information is sent outside of the wind turbine through one or more channels, depending on the configuration of the park:
- If the park has a series network which the supervision system is connected to, the alarms and the overall values and the sampling conditions (but not the spectra, due to their large size) are transmitted to the wind park supervision system through the PLC of the wind turbine. The alarms will be integrated like the rest of the alarms of the park in the supervision application. In the case of parks with networks based on series protocols, if it is determined from the analysis of the overall values collected in the park supervision computer that it is necessary to carry out a more in-depth analysis, it may be necessary to go to the wind turbine which generated the alarm to download the spectra associated to said alarm (which are stored in the storage means of the monitoring equipment).
- If there is an Ethernet network in the park, in addition to sending the alarms and overall values to the park supervision system through the PLC, all the information associated to the measurement (spectra, overall values, alarms and sampling conditions) will be sent to a data storage area installed in a specific computer of the park. Thus, the analysis means, which are preferably installed outside of the park (in the maintenance offices) allow persons skilled in vibrations to carry out the analysis of spectra, overall variables and alarms generated by the monitoring equipment installed in each wind turbine of the park.

The predictive maintenance system is provided with a specific application which allows it to carry out the following tasks on the predictive equipment installed in the wind turbine:
- Complete configuration of the monitoring and processing equipment, which includes parameters such as: valid signal capturing ranges and definition of stable operating conditions; IP address of the equipment; maximum frequencies, number of lines and bands defined for the high, low frequency processing and digital filtering; policy for storing information in the equipment; parameters of the level and tendency alarm detection algorithms; features of the accelerometers; features of the gearbox; features of the generator, and others.
- Continuous collection of information of the predictive equipment, mainly, condition of the equipment, state of communications, state of the sensors, overall variables, spectra, alarms generated, and overall variable and alarm recordings.

The specific application for the equipment system of the predictive maintenance system mentioned in the previous point allows carrying out a set of tasks on the data collected from the predictive maintenance systems installed in the wind turbines, some of which are:
- creation of the hierarchy of elements related to the predictive system- wind turbines, monitor.ng and control equipment, accelerometers-,
- definition of access profiles and exploitation of data,
- generation of predictive equipment configuration profiles according to machine type, features of the critical components,
- analysis of tendencies of the overall variables of the predictive equipment,
- spectral analysis of the spectra collected from the predictive equipment,
- data comparisons.

The system of the invention can therefore be integrated with the control system or PLC already existing in current wind turbines, as well as with the communications networks existing in wind parks and with the wind park supervision system. Thus, without needing a manual processing nor special expert applications, it is possible to detect problems in the critical components and to present these problems together with part of the information which detected them in the usual systems installed in the parks and which are those facilitating the normal operation and exploitation of the wind parks.

The following advantages can be pointed out among the important advantages associated to the installation of a predictive maintenance system in wind turbines:
- corrective maintenance reduction,
- protection for the rest of the components of the wind turbine,
- increase of the useful life of the wind turbine and improvement of its operation.

The following advantages can be pointed out among the important advantages associated to the installation of the system of the invention:
- minimum maintenance and low cost equipment completely integrated with the rest of the components of the wind turbine;
- continuous monitoring capability, filtering the signal capturing according to the operation of the wind turbine, which drastically reduces the amount of irrelevant information to process;
- capability of the equipment installed in the wind turbine to carry out a comprehensive processing of the signals collected and to detect alarms associated to problems in critical components of the wind turbine, drastically reducing the amount of resources to dedicate to analyzing the information obtained;
- capability to integrate the equipment in the usual wind park supervision system, which allows using the usual operation and exploitation of the wind park without needing to dedicate resources or specific systems for managing the predictive system.

### Brief Description of the Drawings

A series of drawings are very briefly described below which aid in better understanding the invention, and which are expressly related to one embodiment of said invention which is presented as a non-limiting example thereof.
Figure 1 shows a scheme of a wind park.
Figures 2 and 3 show flowcharts of the operation of the predictive maintenance system according to a preferred embodiment thereof.
Figure 4 shows a scheme of the processing type and detection of alarms of the system of the invention.
Figure 5 shows an embodiment of the front portion of the monitoring and processing equipment.

### Description of a Preferred Embodiment of the Invention

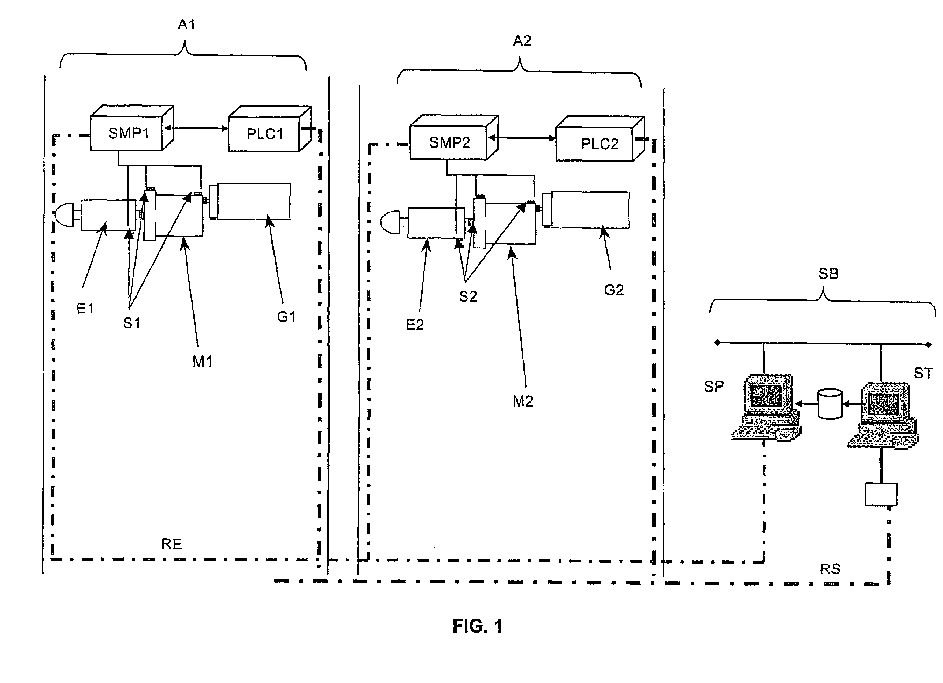

Figure 1 shows a simple scheme of a wind park; to prevent complexity of the drawing, two wind turbines A1 and A2 and one transformation center or electric substation SB are shown in this park. The different elements of the park are supervised by a park supervision and control system (or remote control) ST installed in a central computer located in the wind park and connected to the wind turbines through a local communications network RS, for example to an RS-232 network. The application installed in this central computer collects the operation variables of the elements of the park as well as the alarms occurring in them. The park can additionally have a communications network via Ethernet RE. And in the park substation SB, in addition to the supervision system ST, there can be a computer SP in which the expert software is included so that engineers skilled in spectral and vibration analysis can carry out any type of analysis on the data collected from the monitoring and processing equipments SMPi installed in each wind turbine Ai.

For each wind turbine Ai in this figure, only the critical components in which the accelerometers Si are installed are shown: shaft Ei, gearbox Mi and generator Gi.

The monitoring and processing equipment is installed in the nacelle of the wind turbine, and is connected to the control system PLCi of the wind turbine; the latter, in turn, is connected to the park supervision system ST; therefore, no computer or special application additional to the normal park supervision and control system is needed, the monitoring and processing equipment SMPi being capable of sending the alarms through the control system PLCi of the wind turbine to the normal park supervision and control system, said alarms being able to be represented in said system in the same manner as the rest of the alarms generated in the park by other elements.

Thus, the predictive maintenance system of the invention is integrated in the information system using the infrastructures already available for sending the information generated by each monitoring and processing equipment SMPi.

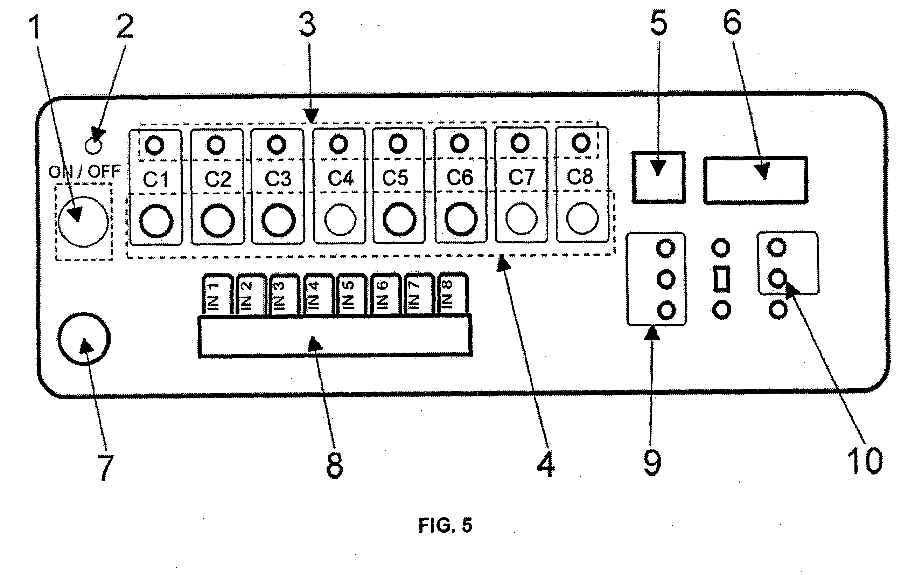

One embodiment of this monitoring and processing equipment SMPi is shown in figure 5.

It is a small equipment, of the approximate size of an A4 sheet of paper about 10 cm thick, and of little weight (approximately 2 kg). It can be integrated in the switch board cubicle installed in the nacelle of the wind turbine, and it uses cooling, heating and feed of said switch board cubicle.

It has an on and off switch 1, as well as an LED 2 indicating the condition of the equipment (on or off). It has a group of 8 LEDs 3 which report the state of the accelerometers. The equipment SMPi is provided with eight channels 8 which the accelerometers are connected to; thus, the equipment has the capability to receive information from eight sensors.

In the present embodiment, it has been indicated (figure 1) that there are six accelerometers Si (one in the main shaft, three in the gearbox and two in the generator), therefore two channels remain free.

The equipment also has eight connectors 4 for connecting apparatuses foreign to the system of the invention (commercial apparatuses), for the purpose of contrasting and checking the information collected by the accelerometers; it is one way of having a second "redundant" information about the signal of the accelerometers, and to be able to analyze it (for example, for vibration data collection) with commercial apparatuses.

The equipment is also provided with an Ethernet connection port 5, as well as an RS-232 connection port 6 (9 pins) for connecting with the PLC of the wind turbine.

It has a feed connector 7 (24 V), and a group of LEDs 9 and 10 indicating the state of Ethernet and RS-232 communications, respectively. It has configuration capability for both the connector port 5 and series port 6.

It is internally provided with a DSP signal processing processor and a microchip with the TCT/IP communications stack, as well as a processor intended for communications.

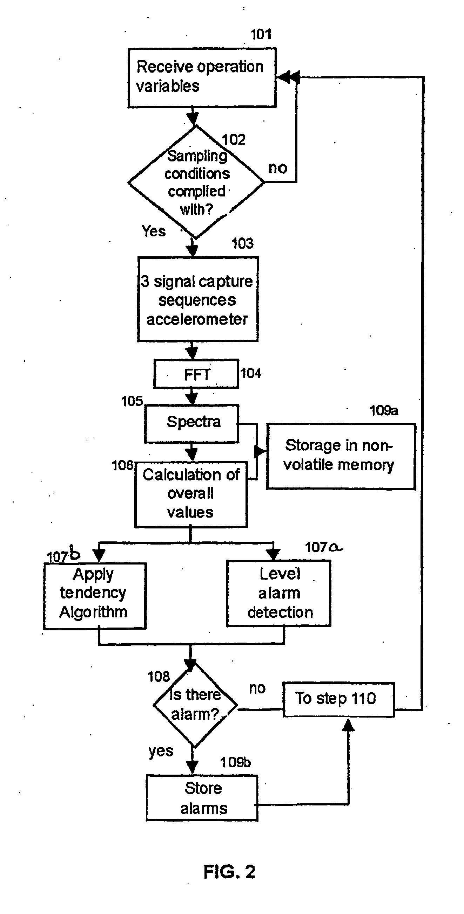

An example of operation of the equipment and system of the invention (the main steps of which are schematically shown in figure 2) is explained below.

Suppose an equipment SMP is installed in the nacelle of an 850 kW rated power wind turbine and is connected to its control system PLC.

Suppose that said equipment is configured with the following operation ranges for the variables of the wind turbine:
- instantaneous power
   valid range= [550, 600]; stable operating conditions= 5%
- revolutions per minute of the wind turbine
   valid range = [1600, 1640]; stable operating conditions= 1%

The parameters of the level alarm detection algorithm, of the tendency alarm detection algorithm and the information storage policy in the equipment are also configured.

Once the equipment is configured, continuous monitoring of the critical components begins. The PLC is in continuous communication with the monitoring equipment of the system of the invention; the PLC continuously sends, for example every 200 ms, information about the operation variables (step 101) to said equipment, in addition to certain additional information such as the date and time of the PLC and the produced accumulated power.

At a given time, the PLC sends the following values to the predictive equipment:
instantaneous power= 575 kW
rpm of the generator= 1615; and
rotation of the ring= stopped.

In this case, the capturing conditions of the signal of the accelerometers (step 102) are complied with, and the equipment begins said process; this lasts approximately 8 seconds and consists of three signal samples (step 103), each one of them simultaneously collects data of the accelerometers connected to the equipment: one for high-frequency analysis, one for low-frequency analysis and the last one for digital filtering.

Suppose that in the next instant (200 ms later), while the equipment is in the sampling process, the PLC sends the following values:
instantaneous power= 580;
rpm of the generator= 1635 and
rotation of the ring= stopped.

The rotation of the ring is still stopped; the variation of the instantaneous power value is less than the 5% configured for this machine, but the variation of the rpm value is greater than the 1% established for the configuration. In this case, the equipment would discard the captured signal since it was not taken in stable operation conditions during the entire sampling process.

Suppose again that the PLC sends values within the operation range and that these values are maintained stable during the entire sampling process such that signal capturing is successfully completed.

In this case, the equipment would begin the process of processing the sampled signal. The measured signal is first filtered with an anti-aliasing filter, the signal is digitalized, a series of filters are applied, and the spectrum is finally obtained by applying the FFT to the sampled signal (steps 104 and 105). Then, the calculations of the overall variables (step 106) of the spectrum obtained will begin: crest factor, overall RMS and RMS of different frequency bands. Once these values are obtained, approximately twenty-one values, the level alarm detection algorithm (step 107a) would be activated on the basis of a series of configured parameters, such as, for example, the number of samples which must exceed the assigned value in order to trigger an alarm. Then, the tendency alarm detection algorithm (step 107b) would be carried out. Suppose that the equipment detects an alarm (step 108).

Once the process has concluded, all the information associated to this sampling is stored in a non-volatile memory (steps 109a and 109b) of the equipment itself, according to the storage policy configured in the equipment. The information will consist of the spectrum, associated overall values, associated alarms and operation values of the wind turbine which determined the sampling which include the date and time.

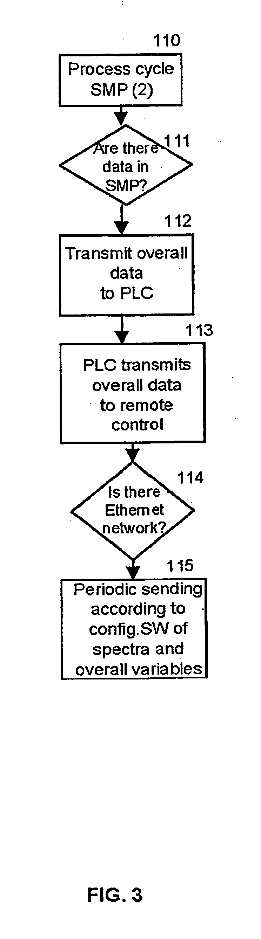

The information is sent outside of the wind turbine through one or more channels (as schematically shown in figure 3).

Thus, once a signal capturing process is in process (step 110), if there are data to send (step 111), this information is sent, depending on the configuration of the park:
- If the park only has the series network RS which the supervision system is connected to, the alarms and overall values and the sampling conditions (but not the spectra, due to their large size) are transmitted to the wind park supervision system ST through the PLC of the wind turbine (steps 112 and 113). The alarms will be integrated like the rest of the alarms of the park in the supervision application. In the case of parks with a network based on a series protocol, if it is determined from the analysis of the overall values collected in the park supervision computer that it is necessary to carry out a more in-depth analysis, it may be necessary to go to the wind turbine which generated the alarm to download the spectra associated to said alarm (which are stored in the monitoring equipment storage means).
- If there is also an Ethernet network RE (step 114) in the park, in addition to sending the alarms and overall values to the park supervision system through the PLC, all the information associated to the measurement (spectra, overall variables, alarms and sampling conditions) will be sent (step 115) to a data storage area installed in a specific computer of the park. Thus, the computer SP containing the analysis software allows experts in vibrations to carry out the analysis of spectra, of overall variables and of alarms generated by the monitoring equipment installed in each wind turbine of the park.

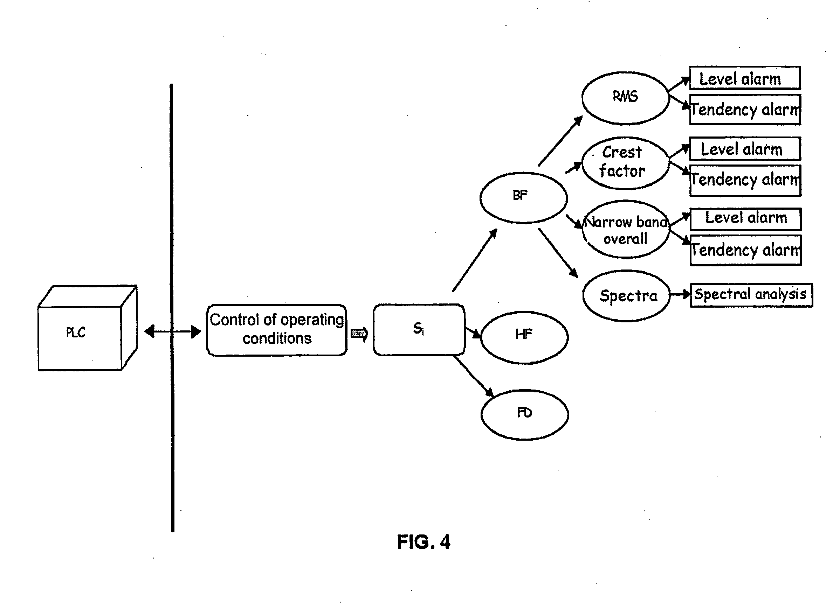

Figure 4 shows in a schematic and simplified manner the processing for calculation of the overall variables and detection of alarms of the system of the invention; to prevent complicating the drawing, only the low-frequency sequence has been shown; the development of the chart is analogous for the rest of the branches (high frequency and demodulation).

When the control system PLC indicates that the operation conditions of the wind turbine are suitable, the accelerometers begin signal capturing: one for high-frequency analysis HF, one for low-frequency analysis BF, and the last one for digital filtering FD or demodulation. As previously indicated, for each one of these three samples, the following are calculated: spectra, overall RMS, crest factor and RMS of different frequency bands, and for each case, level and tendency alarm detection algorithms will be carried out in the monitoring and processing equipment SMP. The corresponding spectral analysis could likewise be carried out in the computer SP in which the expert software (installed in the substation SB) is included.

## Claims

1. A monitoring and processing equipment (SMP) for a wind turbine (Ai), the wind turbine including a control system (PLC),
said equipment comprising:
- connection means with said control system (PLC) of the wind turbine, and
- connection means with a group of accelerometers (Si) placed in pre-established components (Ei, Mi, Gi) of the wind turbine,
- processing means for processing captured signals of the accelerometers to obtain a set of overall variables associated to the captured signals, and
- means for generating alarms related to failures or malfunctioning of the mechanical components of the wind turbine,
**characterized in that**
said monitoring and processing equipment is configured to begin a capturing of the signals of the group of accelerometers whenever predetermined operation variables of the wind turbine, received from the control system, are within a first predetermined operation range,
said signal capturing having a duration which is greater than the time interval between two consecutive communications from the control system, and
said monitoring and processing equipment is configured to complete said signal capturing when the value of said operation variables which has produced the taking of measurements does not vary, during the entire signal capturing, beyond upper and lower limits configured in the equipment, said upper and lower limits defining a second range for each operation variable which is located within the first predetermined operation range,
and wherein the signals captured are discarded if any of said operation variables varies during the entire signal capturing beyond said upper and lower limits configured for each operation variable range.

2. A monitoring and processing equipment according to claim 1, **characterized in that** said predetermined operation variables of the wind turbine (Ai) are the instantaneous power produced by the wind turbine, revolutions per minute of the generator (Gi), and rotation of the ring.

3. A monitoring and processing equipment according to any of the previous claims, **characterized in that** said predetermined ranges of the predetermined operation variables of the wind turbine are defined according to the rated features of the wind turbine (Ai).

4. A monitoring and processing equipment according to any of the previous claims, **characterized in that** said upper and lower limits, for each operation variable, are determined by a percentage of the initial value of each variable.

5. A monitoring and processing equipment according to any of the previous claims, **characterized in that** capturing the signal of the accelerometers consists of taking three consecutive samples: one for high-frequency processing (HF), one for low-frequency processing (BF), and one for digital filtering processing (FD).

6. A monitoring and processing equipment according to any of the previous claims, **characterized in that** said processing means comprise:
- means for conditioning the signal,
- means for calculating a set of overall values,
- means for carrying out a level alarm detection algorithm; and
- means for carrying out a tendency alarm detection algorithm.

7. A monitoring and processing equipment according to claim 6 when it depends on claim 5, **characterized in that** the parameters of the alarm detection algorithms and the maximum frequencies, frequency bands can be configured in the monitoring and processing equipment itself.

8. A monitoring and processing equipment according to any of the previous claims, **characterized in that** it comprises storage means for storing the information introduced in or generated by the monitoring and processing equipment itself.

9. A monitoring and processing equipment according to claim 8, **characterized in that** said information stored in the storage means includes spectra, overall values, alarms, operation variables of the wind turbine, complete configuration of the equipment and overall variable and alarm recordings.

10. A monitoring and processing equipment according to any of the previous claims, **characterized in that** said pre-established components of the wind turbine are the main shaft (Ei), gearbox (Mi) and generator (Gi).

11. A predictive maintenance system for wind parks, the wind park comprising a group of wind turbines (Ai), a communications network (RS) and a supervision and control system (ST),
**characterized in that** the predictive maintenance system comprises:
- a monitoring and processing equipment (SMP) according to any of the previous claims,
said monitoring and processing equipment being connected to the control system (PLC) of the wind turbine (Ai) such that
the monitoring and processing equipment is configured to send alarms through the control system of the wind turbine to the supervision and control system.

12. A predictive maintenance system according to claim 11, **characterized in that** it comprises means for spectral and vibration analysis (SP) of the information extracted from the monitoring and processing equipments (SMP).

## Patentansprüche

1. - Ein Überwachungs- und Verarbeitungsgerät (SMP) für eine Windenergieanlage (Ai), welche über ein Kontrollsystem (PLC) verfügt;
besagtes Gerät beinhaltet:
- Möglichkeiten zur Verbindung mit besagtem Kontrollsystem (PLC) der Windanlage, und
- Möglichkeiten zur Verbindung mit einer Gruppe von Beschleunigungssensoren (Si), welche in vorgefertigten Komponenten (Ei, Mi, Gi) der Windanlage plaziert sind,
- Möglichkeiten zur Verarbeitung der abgetasteten Signale der Beschleunigungssensoren um einen Satz von Gesamtkennwerten zu bestimmen, welche von den aufgenommenen Signalen abhängen.
- Möglichkeiten Alarme zu erzeugen, welche mit Fehlfunktionen oder Ausfällen von mechanischen Komponenten der Windenergieanlage zusammenhängen,
**dadurch gekennzeichnet, dass**
besagtes Überwachungs- und Verarbeitungsgerät so konfiguriert ist, dass es selbstständig mit dem Messen von Daten beginnt, wenn vorbestimmte Betriebskennwerte, welche von dem Kontrollsystem der Windanlage geliefert werden, innerhalb vorbestimmter Arbeitsbereiche liegen,
besagte Messungen dauern länger als das Zeitintervall zwischen zwei aufeinanderfolgenden Nachrichten vom Kontrollsystem (PLC), und
besagtes Überwachungs- und Verarbeitungsgerät ist so konfiguriert, dass es die Messungen dann auch beendet, wenn die beschriebenen Betriebskennwerte, welche die Messungen ausgelöst haben, wärend der gesammten Messungen nicht schwanken und innerhalb, im Gerät eingestellter, oberer und unterer Grenzen bleiben, diese oberen und unteren Grenzen sind die zweiten Parameterbereiche die sich im Bereich der erstgenannten Betriebskennwerte befinden, und
wobei die gemessenen Signale verworfen werden, falls eine der besagten Betriebskennwerte wärend der Messungen über den Bereich der oberen und unteren Grenzen hinausläuft.

2. - Ein Überwachungs- und Verarbeitungsgerät entsprechend Anspruch 1, **dadurch gekennzeichnet, dass** die besagten Betriebskennwerte der Windanlage (Ai) aus Ausgangsleistung der Windanlage, Umdrehungen pro Minute des Generators (Gi) und die Aktivität des Windnachführmechanismus bestehen.

3. - Ein Überwachungs- und Verarbeitungsgerät entsprechend einem der vorigen Ansprüche, **dadurch gekennzeichnet, dass** die besagten vorbestimmten Bereiche der vorbestimmten Betriebskennwerte von den Nennwerten der Windanlage (Ai) abhängen.

4. - Ein Überwachungs- und Verarbeitungsgerät entsprechend einem der vorigen Ansprüche, **dadurch gekennzeichnet, dass** die besagten oberen und unteren Grenzen jedes Betriebskennwertes durch einen prozentualen Anteil des Anfangswertes dieses Kennwertes gegeben ist.

5. - Ein Überwachungs- und Verarbeitungsgerät entsprechend einem der vorigen Ansprüche, **dadurch gekennzeichnet, dass** die Messung der Signale der Beschleunigungssensoren aus drei aufeinanderfolgenden Messungen besteht: eine für die Hochfrequenzverarbeitung (HF), eine für Niederfrequenzverarbeitung (BF) und eine zur digitalen Filterung (FD).

6. - Ein Überwachungs- und Verarbeitungsgerät entsprechend einem der vorigen Ansprüche, **dadurch gekennzeichnet, dass** das besagte Verarbeitungsmöglichkeiten folgendes umfassen:
- Möglichkeiten das Signal aufzubereiten,
- Möglichkeiten um einen Satz von Gesamtwerten zu berechnen,
- Möglichkeiten einen Levelalarmalgorithmus auszuführen; und
- Möglichkeiten einen Tendenzalarmalgorithmus auszuführen.

7. - Ein Überwachungs- und Verarbeitungsgerät entsprechend den Ansprüchen 5 und 6, **dadurch gekennzeichnet, dass** die Parameter für die Alarmerkennungsalgoritmen ebenso wie die Definition der Maximalfrequenzen, der Frequenzbänder und anderer Werte im Überwachungs- und Verarbeitungsgerät konfiguriert werden können.

8. - Ein Überwachungs- und Verarbeitungsgerät entsprechend einem der vorigen Ansprüche, **dadurch gekennzeichnet, dass** es über Möglichkeiten zur Speicherung der Daten, die vom Gerät aufgenommen oder erzuegt werden, verfügt.

9. - Ein Überwachungs- und Verarbeitungsgerät entsprechend Anspruch 8, **dadurch gekennzeichnet, dass** die auf dem Gerät gespeicherten Informationen Spektren, Gesamtwerte, Alarme, Betriebskennwerte der Anlage, komplette konfiguration des Gerätes, die gesammten Kennwerte und die Alarmverläufe, unfassen.

10. - Ein Überwachungs- und Verarbeitungsgerät entsprechend einem der vorigen Ansprüche, **dadurch gekennzeichnet, dass** besagte vorgefertigte Komponenten der Windanlage die Hauptachse (Ei), das Übersetzungsgetriebe (Mi) und den Generator (Gi) umfassen.

11. - Ein prädiktives Verwaltungssystem für Windparks, welcher eine Gruppe von Windenergieanlagen (Ai), ein Kommunikationsnetzwerk (RS) und ein Überwachungs- und Kontrollsystem (ST) umfasst,
**dadurch gekennzeichnet, dass** das prädiktive Verwaltungssystem beinhaltet:
- Ein Überwachungs- und Verarbeitungsgerät (SMP) entsprechen einem der vorherigen Ansprüchen,
besagtes Überwachungs- und Verarbeitungsgerät ist mit dem Kontrollsystem (PLC) der Windanlage (Ai) verbunden, und
das Überwachungs- und Verarbeitungsgerät ist so konfiguriert, dass es Alarme durch das Kontrollsystem der Windanlage an das Überwachungs- und Kontrollsystem sendet.

12. - Ein prädiktives Verwaltungssystem enstprechend Anspruch 11, **dadurch gekennzeichnet, dass** es über Mittel zur Spektral- und Vibrationsanalyse (SP) verfügt, um die Informationen, die vom Überwachungs- und Verarbeitungsgerät (SMP) übermittelt werden zu untersuchen.

## Revendications

1. Un système de contrôle et de traitement (SMP) pour une éolienne (Ai), l'éolienne incluant un système de commande (API), ledit équipement qui comprend :
- les moyens de connexion au dit système de commande (API) de l'éolienne, et
- les moyens de connexion au groupe des accéléromètres (Si) situés sur les composants prédéfinis (Ei, Mi, Gi) de l'éolienne,
- les moyens de traitement nécessaires pour traiter les signaux des accéléromètres capturés, pour obtenir une série des variables globales associées aux signaux capturés, et
- les moyens pour déclencher les alarmes associées aux pannes ou dysfonctionnements des composants mécaniques de l'éolienne, **caractérisé en ce que** ledit équipement de contrôle et de traitement est configuré pour commencer une capture des signaux du groupe des accéléromètres, chaque fois que les variables de fonctionnement prédéfinies de l'éolienne, envoyées par le système de commande, sont comprises dans une tranche de fonctionnement prédéfinie, ladite capture du signal ayant une durée qui est supérieure à l'intervalle de temps compris entre deux communications consécutives à partir du système de commande, et ledit équipement de contrôle et de traitement est configuré pour mettre fin à la capture du signal lorsque la valeur de ces variables de fonctionnement qui a déclenché la prise des mesures ne varie pas, pendant toute la durée de la capture du signal, au-delà des limites supérieures et inférieures configurées sur l'équipement, ces limites supérieures et inférieures définissant une deuxième tranche pour chaque variable de fonctionnement qui est comprise dans la première tranche de fonctionnement prédéfinie, et où les signaux capturés sont supprimés si l'une de ces variables de fonctionnement varie pendant toute la durée de la capture du signal au-delà de ces limites supérieures et inférieures configurées pour chaque tranche de variable de fonctionnement.

2. Un équipement de contrôle et de traitement conformément à la revendication 1, **caractérisé en ce que** lesdites variables de fonctionnement prédéfinies de l'éolienne (Ai) représentent la puissance instantanée produite par l'éolienne, les révolutions par minute du générateur (Gi) et la rotation de l'anneau.

3. Un équipement de contrôle et de traitement, conformément à l'une des revendications précédentes, **caractérisé en ce que** les tranches prédéfinies des variables de fonctionnement prédéterminées de l'éolienne sont définies en fonctions des caractéristiques nominales de l'éolienne (Ai).

4. Un équipement de contrôle et de traitement, conformément à l'une des revendications précédentes, **caractérisé en ce que** ces limites supérieures et inférieures, pour chaque variable de fonctionnement, sont déterminées par un pourcentage de la valeur initiale de chaque variable.

5. Un équipement de contrôle et de traitement, conformément à l'une des revendications précédentes, **caractérisé en ce que** la capture du signal des accéléromètres consiste à prendre trois échantillons consécutifs : un pour le traitement haute fréquence (HF), un pour le traitement basse fréquence (BF) et un pour le traitement du filtrage numérique (FD).

6. Un équipement de contrôle et de traitement, conformément à l'une des revendications précédentes, **caractérisé en ce que** ces moyens de traitement comprennent :
- les moyens pour conditionner le signal,
- les moyens pour calculer une série de valeurs globales,
- les moyens pour exécuter un algorithme de détection de l'alarme de niveau, et
- les moyens pour exécuter un algorithme de détection de l'alarme de tendance.

7. Un équipement de contrôle et de traitement, conformément à la revendication 6 quand elle dépend de la 5, **caractérisé en ce que** les paramètres des algorithmes de détection des alarmes et des fréquences maximum et les bandes de fréquence peuvent être configurés sur l'équipement de contrôle et de traitement lui-même.

8. Un équipement de contrôle et de traitement, conformément à l'une des revendications précédentes, **caractérisé en ce qu'**il est doté de moyens de stockage pour stocker les informations introduites dans ou générées par l'équipement de contrôle et de traitement lui-même.

9. Un équipement de contrôle et de traitement, conformément à la revendication 8, **caractérisé en ce que** ces informations stockées sur les moyens de stockage incluent les spectres, les valeurs globales, les alarmes, les variables de fonctionnement de l'éolienne, la configuration complète des enregistrements relatifs à l'équipement, aux variables globales et aux alarmes.

10. Un équipement de contrôle et de traitement, conformément à l'une des revendications précédentes, **caractérisé en ce que** lesdits composants prédéfinis de l'éolienne sont le conduit principal (Ei), le multiplicateur (Mi) et le générateur (Gi).

11. Un système de maintenance prédictive pour les parcs éoliens, le parc éolien étant formé par un groupe d'éoliennes (Ai), un réseau de communications (RS) et un système de supervision et de commande (ST),**caractérisé en ce que** le système de maintenance prédictive est formé par :
- un équipement de contrôle et de traitement (SMP), conformément à l'une des revendications précédentes, ledit équipement de contrôle et de traitement qui est connecté au système de commande (API) de l'éolienne (Ai), de telle sorte que l'équipement de contrôle et de traitement soit configuré pour envoyer les alarmes au système de supervision et de commande grâce au système de commande de l'éolienne.

12. Un système de maintenance prédictive, conformément à la revendication 11, **caractérisé en ce qu'**il comprend les moyens pour l'analyse spectrale et des vibrations (SP) des informations extraites des équipements de contrôle et de traitement (SMP).
